# EUROPÄISCHE PATENTANMELDUNG

(11) **EP 1 743 826 A1**
(43) Veröffentlichungstag der Anmeldung: **17.01.2007**
(21) Anmeldenummer: 06012954.1
(22) Anmeldetag: 23.06.2006
(51) Int. Cl.: B62D 3/12

(54) **Lenkgetriebe für ein Fahrzeug**

(30) Priorität: 12.07.2005 DE 102005032833
(71) Anmelder: ThyssenKrupp Presta SteerTec GmbH, 40476 Düsseldorf (DE)
(72) Erfinder: Maier, Michaela, 71522 Backnang (DE); Speidel, Gerd, 73650 Winterbach (DE)
(74) Vertreter: LENZING GERBER

(57) **Zusammenfassung**

Die Erfindung betrifft ein Lenkgetriebe für ein Fahrzeug, umfassend eine in einem Gehäuse in einer Längsrichtung verschiebbar aufgenommene Zahnstange (13) und ein in einer Führung (8) geführtes und in Führungsrichtung kraftbeaufschlagtes Druckstück (1), wobei durch das Druckstück (1) eine zu der Längsrichtung der Zahnstange (13) senkrechte Kraftkomponente auf die Zahnstange ausübbar ist, und wobei zumindest eines der beiden, Führung (8) oder Druckstück (1), ein elastisches Mittel (5) aufweist, mittels dessen ein formsteifer Wandbereich des Druckstücks (1) gegenüber einer formsteifen Wand der Führung (8) zwecks Verringerung eines radialen Spiels zwischen Druckstück (1) und Führungswand (8) vorgespannt andrückbar ist. Ein Lenkgetriebe, bei dem die Führung des Druckstücks mit einfachen Mitteln verbessert ist, wird erfindungsgemäß dadurch geschaffen, dass das elastische Mittel (5) sich in der Führungsrichtung über eine Strecke erstreckt, die erheblich größer ist als eine maximale Größe des radialen Spiels.

## Beschreibung

Die Erfindung betrifft ein Lenkgetriebe für ein Fahrzeug nach dem Oberbegriff des Anspruchs 1.

Bei der Konstruktion von Druckstücken, die auf Zahnstangen von Lenkgetrieben eine zumeist federbelastete Kraft zwecks Ausgleichs eines Spiels der Zahnstange ausüben, sind verschiedene Lösungen vorgeschlagen worden, um ein Spiel in der Führung des Druckstücks auszugleichen und insgesamt eine spielfreie und dennoch leichtgängige Führung der Zahnstange zur ermöglichen.

EP 1 084 933 B1 beschreibt eine Lösung, bei der das in einer zylindrischen Bohrung geführte, im Querschnitt kreisförmige Druckstück eine Ringnut aufweist, die der Aufnahme eines O-Rings dient, wobei die Ringnut exzentrisch zu dem Umfang des Druckstücks ausgebildet ist. Die hieraus folgende exzentrische Anordnung des O-Rings bewirkt ein einseitiges federndes Andrücken der Druckstückwandung an die Wandung der Führung, so dass hierdurch ein elastisch kraftbelasteter Spielausgleich gegeben ist. Exzentrische Ringnuten sind aufwendig in der Herstellung, und zudem kann durch einen einfachen O-Ring eine Verkippung des Druckstücks um eine zu seiner Führungsachse senkrechte Kippachse nicht wirkungsvoll gedämpft oder vermieden werden.

Es ist die Aufgabe der Erfindung, ein eingangs genanntes Lenkgetriebe anzugeben, bei dem die Führung des Druckstücks mit einfachen Mitteln verbessert ist.

Diese Aufgabe wird erfindungsgemäß mit den kennzeichnenden Merkmalen des Anspruchs 1 gelöst.

Dadurch, dass das elastische Mittel sich in der Führungsrichtung über eine Strecke erstreckt, die erheblich größer ist als eine maximale Größe des radialen Spiels, ist auf einfache Weise erzielt, dass eine Verkippung des Druckstücks um eine zur Führungsachse senkrechte Kippachse verhindert ist. Zudem kann bedingt durch die über eine große Strecke erfolgende Anlage der elastischen Mittel eine Materialauswahl getroffen werden, bei der keine allzu hohe Komprimierung des Materials auftritt, wie es bei der vergleichsweise kleinen Anlagefläche eines in einer exzentrischen Nut befindlichen O-Rings der Fall wäre. Hierdurch kann einer vorzeitigen Ermüdung und einem hohen Abrieb des elastischen Materials wirkungsvoll begegnet werden, so dass die Lebensdauer des Spielausgleichs des erfindungsgemäßen Druckstücks verbessert ist.

In einer bevorzugten Ausführungsform umfasst das elastische Mittel zumindest einen Längskörper aus einem elastischen Material, insbesondere Kunststoff oder Kautschuk. Durch eine bevorzugt prismatische Ausformung des Längskörpers ist dieser auf einfache Weise entweder in die Führung oder in das Druckstück einsetzbar, beispielsweise in eine in der entsprechenden Wandung vorgesehene Nut, die parallel zur Führungsachse des Druckstücks angeordnet ist. Bevorzugt ist diese Nut in der Wandung des Druckstücks vorgesehen, kann aber auch in der Wandung der Führung vorgesehen sein.

Besonders vorteilhaft ist zumindest ein zweiter Längskörper vorgesehen, der zu dem ersten Längskörper im Wesentlichen parallel angeordnet ist. Hierdurch wird eine besonders gerichtete Vorspannung des Druckstücks gegen die Führungswandung bewirkt, so dass eine Erhöhung der Lebensdauer des Spielausgleichs zu erwarten ist und zugleich eine hohe Kraft in Richtung des Spielausgleichs bei vergleichsweise geringem Reibungswiderstand des Druckstücks in Führungsrichtung erzielbar ist.

Zum Zwecke der einfachen Herstellung und Montage sind die beiden Längskörper vorteilhaft über eine Brücke einstückig miteinander Verbunden. Die Brücke, die ebenfalls aus dem elastischen Material besteht, kann dabei zusätzliche Dämpfungseigenschaften in axialer Richtung übernehmen.

In allgemein bevorzugter Ausführung hat der Längskörper einen im Wesentlichen kreisförmigen Querschnitt. In hierzu alternativer Ausführung kann der Längskörper auch eine mit der Wand der Führung zusammenwirkende Abflachung aufweisen, so dass sein Querschnitt von einer Kreisform abweicht. Allgemein ist dabei die Einfachheit der Herstellung unter Kostengesichtspunkten gegen eine Optimierung der Formgebung unter Gesichtspunkten der Reibung und der ausübbaren Kräfte je nach den Vorgaben abzuwägen.

Weiterhin bevorzugt ist das elastische Mittel getrennt von Mitteln zur Druckbeaufschlagung der Zahnstange ausgebildet, insbesondere besteht es aus einem anderen Material. Hierdurch ist eine einfache Optimierung des Radialspielausgleichs zugleich mit einer einfachen Optimierung der auf die Zahnstange wirkenden Dämpfungskräfte möglich, da im allgemeinen an die mit der Zahnstange zusammenwirkenden Flächen des Druckstücks andere Anforderungen zu stellen sind als an die elastischen Mittel, die für den radialen Spielausgleich des Druckstücks Sorge tragen.

Weiterhin bevorzugt weist das Druckstück eine ringförmige, das Druckstück umlaufende Dichtung auf. Eine solche O-Ringdichtung kann allgemein vorgesehen sein, um eine erhöhte Dichtheit des Druckstückkörpers gegen Schmiermittel oder von außen eindringenden Staub zu gewährleisten.

Weitere Vorteile und Merkmale ergeben sich aus den nachfolgend geschilderten Ausführungsbeispielen sowie aus den abhängigen Ansprüchen.

Nachfolgend werden zwei besonders bevorzugte Ausführungsbeispiele eines erfindungsgemäßen Lenkgetriebes beschrieben und anhand der anliegenden Zeichnungen näher erläutert.
Fig.1 zeigt eine räumliche Ansicht eines ersten erfindungsgemäßen Ausführungsbeispiels eines Druckstücks eines Lenkgetriebes.
Fig. 2 zeigt eine Draufsicht auf das Druckstück aus Fig. 1 von der Seite.
Fig. 3 zeigt einen schematisierten Querschnitt durch ein erfindungsgemäßes Druckstück.
Fig. 4 zeigt eine räumliche Explosionsdarstellung eines zweiten erfindungsgemäßen Ausführungsbeispiels eines Druckstücks eines Lenkgetriebes.
Fig. 5 zeigt das Druckstück aus Fig. 4 in einem zusammengesetzten Zustand.

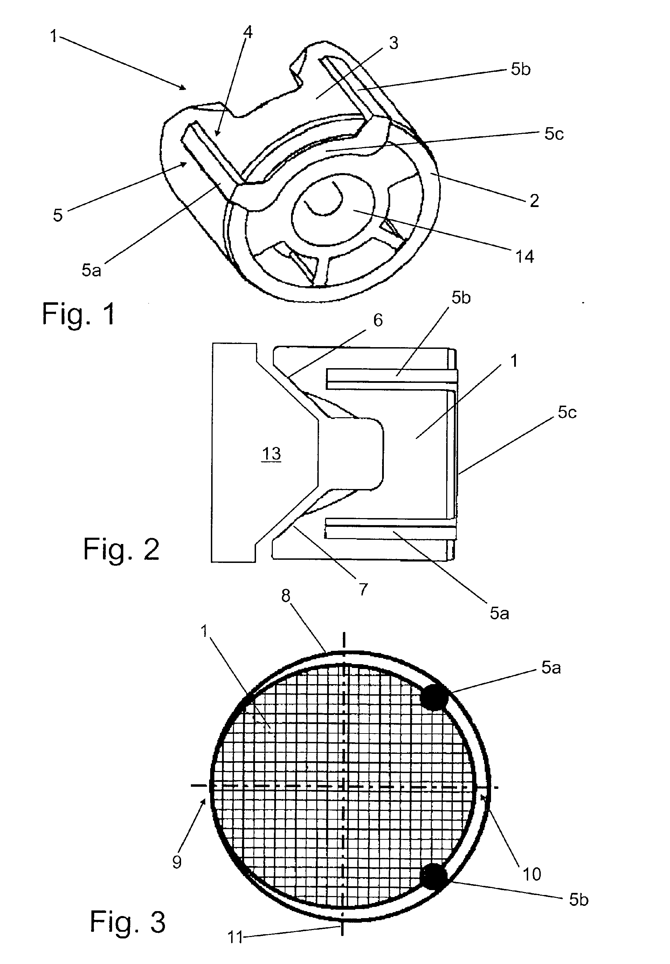

Das in Fig. 1 gezeigte Druckstück 1 hat einen Druckstückkörper aus Metall mit bereichsweise kreisförmigem Querschnitt. Ausgehend von einer einer Zahnstange 13 abgewandten Endfläche 2 sind in eine äußere Wand 3 des Druckstückkörpers 1 eine erste Längsnut 4 und eine parallele, zweite Längsnut 4 eingefräst, wobei die Längsnuten 4 bezüglich einer zentralen Symmetrieachse des Druckstückkörpers 1 unter einem Winkel von ungefähr 90° zueinander angeordnet sind (siehe Fig. 3).

Ein elastisches Mittel 5 umfasst einen ersten, im wesentlichen prismatisch geformten Längskörper 5a, einen zweiten prismatischen Längskörper 5b und eine die beiden prismatischen Längskörper 5a, 5b miteinander verbindende Brücke 5c. Das elastische Mittel 5 ist insgesamt so ausgeformt, dass die beiden prismatischen Längskörper 5a, 5b in die beiden Längsnuten 4 des Druckstückkörpers eingeschoben werden können. Eine Spiralfeder (nicht dargestellt) wird bei Einbau des Druckstücks in eine Führung 8 bzw. in das die Führung 8 tragende Gehäuse des Lenkgetriebes (nicht dargestellt) zur Kraftbeaufschlagung des Druckstücks 1 in Richtung der Führung 8 eingesetzt. Die Spiralfeder ist dabei einerseits in einer ringförmigen Vertiefung 14 gegen das Druckstück 1 abgestützt und andererseits gegen ein (nicht dargestelltes) einschraubbares Gegenlager. Der Abstand von Gegenlager und Druckstück ist dabei so gering, dass die Längskörper 5a, 5b an einem nennenswerten Verrutschen in ihren Nuten 4 gehindert sind.

Aus der Darstellung nach Fig. 2 ist ersichtlich, dass das Druckstück 1 zwei bezüglich seiner Führungsrichtung bzw. zentrischen Achse geneigte Führungsflächen 6, 7 aufweist, auf die elastische Führungskörper (nicht dargestellt) aufsetzbar sind. Diese Führungskörper sind Mittel zur Druckbeaufschlagung einer Zahnstange 13, wobei die Druckbeaufschlagung der Zahnstange 13 mittels Spiralfeder und Druckstück 1 auf an sich bekannte Weise erfolgt.

Die Erfindung funktioniert nun wie folgt:

Die schematische Schnittdarstellung Fig. 3 zeigt, dass die dort vereinfachend mit kreisförmigen Querschnitt dargestellten elastischen Mittel 5a, 5b den metallischen Druckstückkörper 1 in einer zylindrischen Bohrung einer Führung 8 gemäß der Zeichnung in Querrichtung nach Links vorspannen. In einem Bereich 9 liegt hierdurch die metallische steife Wandung des Drückstückkörpers 1 an der metallischen steifen Wandung der Führungsbohrung 8 vorgespannt an. Der im Bereich 10 verbleibende Spalt stellt somit das maximale radiale Spiel zwischen Druckstück 1 und Führung 8 dar. Dadurch, dass die Länge der Längskörper 5a, 5b in ihrer Längsrichtung die Größe des Spaltes 10 in radialer Richtung erheblich übersteigen, insbesondere mehr als doppelt so groß sind, ist ein Verkippen des Druckstücks 1 um eine zu seiner Führungsrichtung senkrechte Kippachse 11 (siehe Fig. 3) wirkungsvoll vermieden.

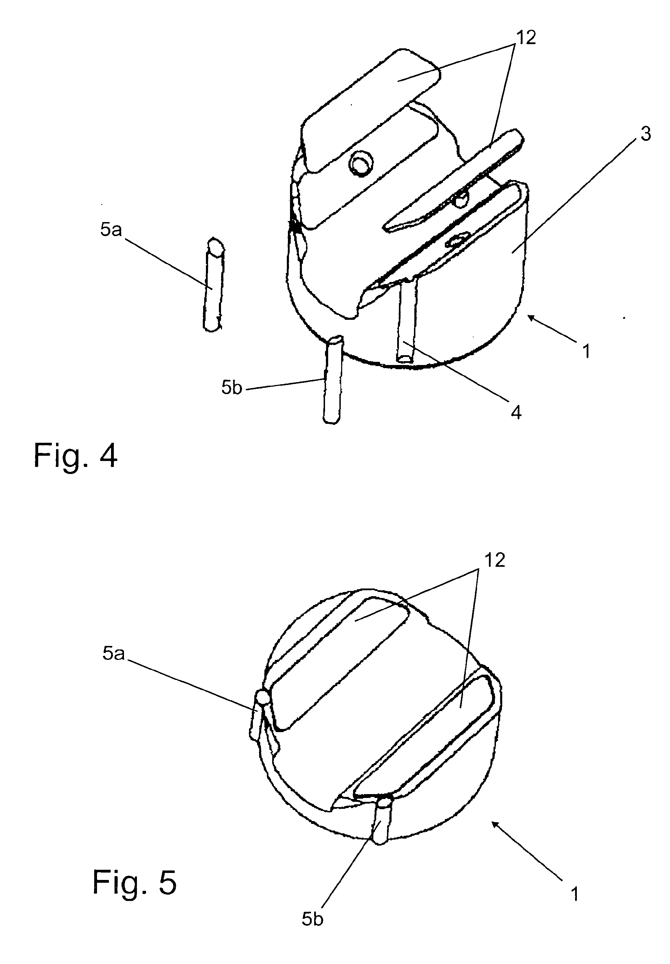

Das zweite bevorzugte Ausführungsbeispiel gemäß Fig. 4 und Fig. 5 unterscheidet sich von dem ersten Ausführungsbeispiel wie folgt:

Die beiden Längskörper 5a, 5b weisen keine sie zu einem einzigen Stück verbindende Brücke auf. Zudem sind sie im Interesse einer einfachen Herstellung als abschnittsweise zylindrische Körper, d.h. als Prismenkörper mit kreisförmigem Querschnitt, ausgebildet. Insbesondere können sie somit aus einem handelsüblichen zylindrischen Vollmaterial geschnitten sein. Die Fixierung der Längskörper 5a, 5b in ihren Längsnuten 4, die vorliegend teilkreisförmigen Querschnitt haben, erfolgt dadurch, dass die Nuten zum einen einseitig begrenzte Sacknuten sind und zum anderen die offene Seite der Nuten 4 durch nach Einsetzen der Längskörper 5a, 5b eingesetzte Führungskörper 12 überdeckt werden. Durch die Führungskörper 12, über die eine zur Bewegungsrichtung der Zahnstange 13 senkrechte Andruckkraft gegen ein Antriebsritzel ausgeübt wird, werden die Längskörper 5a, 5b an einem Herausrutschen aus den Nuten 4 bei einem Bewegen des Druckstücks 1 in Führungsrichtung gehindert. Aufgrund der jeweils unterschiedlichen Anforderungen an die elastischen Längskörper 5a, 5b und die im allgemeinen aus einem ebenfalls elastischen Material bestehenden Führungskörper 12 ist es vorgesehen, dass die Führungskörper 12 aus einem anderen Material bestehen als die Längskörper 5a, 5b, wobei es sich bei dem Material der Längskörper 5a, 5b bevorzugt um Kautschuk oder ein Polymeer handelt.

## Patentansprüche

1. Lenkgetriebe für ein Fahrzeug, umfassend
eine in einem Gehäuse in einer Längsrichtung verschiebbar aufgenommene Zahnstange (13) und
ein in einer Führung (8) geführtes und in Führungsrichtung kraftbeaufschlagtes Druckstück (1),
wobei durch das Druckstück (1) eine zu der Längsrichtung der Zahnstange (13) senkrechte Kraftkomponente auf die Zahnstange (13) ausübbar ist, und
wobei zumindest eines der beiden, Führung (8) oder Druckstück (1), ein elastisches Mittel (5) aufweist, mittels dessen ein formsteifer Wandbereich des Druckstücks (1) gegenüber einer formsteifen Wand der Führung (8) zwecks Verringerung eines radialen Spiels zwischen Druckstück (1) und Führungswand (8) vorgespannt andrückbar ist,
**dadurch gekennzeichnet,**
**dass** das elastische Mittel (5) sich in der Führungsrichtung über eine Strecke erstreckt, die erheblich größer ist als eine maximale Größe des radialen Spiels.

2. Lenkgetriebe nach Anspruch 1, **dadurch gekennzeichnet, dass** das elastische Mittel (5) zumindest einen insbesondere prismatisch geformten Längskörper (5a) aus einem elastischen Material, insbesondere Kunststoff oder Kautschuk, umfasst.

3. Lenkgetriebe nach Anspruch 2, **dadurch gekennzeichnet, dass** zumindest ein zweiter Längskörper (5b) vorgesehen ist, der zu dem ersten Längskörper (5a) im wesentlichen parallel angeordnet ist.

4. Lenkgetriebe nach Anspruch 3, **dadurch gekennzeichnet, dass** die beiden Längskörper (5a, 5b) über eine Brücke (5c) einstückig miteinander verbunden sind.

5. Lenkgetriebe nach einem der Ansprüche 2 bis 4, **dadurch gekennzeichnet, dass** der Längskörper (5a, 5b) einen im wesentlichen kreisförmigen Querschnitt hat.

6. Lenkgetriebe nach einem der Ansprüche 2 bis 4, **dadurch gekennzeichnet, dass** der Längskörper (5a, 5b) eine mit der Wand der Führung zusammenwirkende Abflachung aufweist.

7. Lenkgetriebe nach einem der Ansprüche 1 bis 6, **dadurch gekennzeichnet, dass** das elastische Mittel (5) getrennt von Mitteln (12) zur Druckbeaufschlagung der Zahnstange (13) ausgebildet ist, insbesondere aus einem anderen Material besteht.

8. Lenkgetriebe nach einem der Ansprüche 1 bis 7, **dadurch gekennzeichnet, dass** das Druckstück (1) eine ringförmige, das Druckstück (1) umlaufende Dichtung aufweist.
